# FASCICULE DE BREVET EUROPEEN

(11) **EP 3 844 022 B1**
(45) Date de publication et mention de la délivrance du brevet: **13.09.2023**
(21) Numéro de dépôt: 19749361.2
(22) Date de dépôt: 08.08.2019
(51) Int. Cl.: B60N 2/80, B60N 2/58

(54) **APPUI-TÊTE DE SIÈGE DE VÉHICULE AUTOMOBILE**
KOPSTÜTZE EINES KRAFTFAHRZEUGSSITZES
HEAD-REST OF A VEHICLE SEAT

(30) Priorité: 29.08.2018 FR 1857781
(43) Date de publication de la demande: 07.07.2021
(73) Titulaire: TESCA France, 92977 Paris La Défense Cedex (FR)
(72) Inventeur: GUSTIN, José, 75008 Paris (FR); GANIER, David, 75008 Paris (FR)
(74) Mandataire: Sayettat, Julien Christian
(86) Numéro de dépôt international: PCT/EP2019/071312
(87) Numéro de publication internationale: WO 2020/043454

(56) Documents cités:
- DE-A1-102013 201 813
- DE-A1-102017 208 798
- US-A1- 2018 154 813

## Description

L'invention concerne un appui-tête de siège de véhicule automobile.

Il est connu du document DE-10 2013 201813 de réaliser un appui-tête de siège de véhicule automobile, ledit appui-tête comprenant :
- une armature de montage sur un dossier dudit siège,
- un bloc de rembourrage associé en haut de ladite armature, ledit bloc s'inscrivant sensiblement dans une enveloppe en forme générale de parallélépipède plié selon un axe transversal médian de manière à présenter :
   o deux faces latérales en forme générale de V aplati renversé d'un quart de tour dont la pointe est tournée vers l'avant, lesdites faces définissant une sous-face supérieure correspondant à la branche supérieure du V et une sous-face inférieure correspondant à la branche inférieure du V,
   o une face avant s'inscrivant sensiblement dans un plan avant supérieur et un plan avant inférieur se coupant selon un axe avant parallèle audit axe médian,
   o une face arrière s'inscrivant sensiblement dans un plan arrière supérieur et un plan arrière inférieur se coupant selon un axe arrière parallèle audit axe médian,
   o une face supérieure,
   o une face inférieure,
   lesdites faces se reliant les unes aux autres par des zones de jonction,
- une coiffe de revêtement dudit bloc, ladite coiffe étant formée par une pluralité de formats de matériau de revêtement associés entre eux bord à bord de manière à définir une poche de logement dudit bloc.

Avec une telle géométrie de bloc de rembourrage, la réalisation de la coiffe requiert d'associer entre eux un grand nombre de formats de revêtement - notamment au moins cinq formats - une telle pluralité de formats ayant été considérée jusqu'à présent comme nécessaire pour obtenir une coiffe permettant de s'adapter à un tel bloc.

Il en résulte une grande complexité de la réalisation de la coiffe, et donc un coût de fabrication élevé.

L'invention a pour but de pallier ces inconvénients.

A cet effet, l'invention propose un appui-tête de siège de véhicule automobile, ledit appui-tête comprenant :
- une armature de montage sur un dossier dudit siège,
- un bloc de rembourrage associé en haut de ladite armature, ledit bloc s'inscrivant sensiblement dans une enveloppe pliée selon un axe transversal médian de manière à présenter :
   o deux faces latérales en forme générale de V aplati renversé d'un quart de tour dont la pointe est tournée vers l'avant, lesdites faces définissant une sous-face supérieure correspondant à la branche supérieure du V et une sous-face inférieure correspondant à la branche inférieure du V,
   o une face avant s'inscrivant sensiblement dans un plan avant supérieur et un plan avant inférieur se coupant selon un axe avant parallèle audit axe médian,
   o une face arrière s'inscrivant sensiblement dans un plan arrière supérieur et un plan arrière inférieur se coupant selon un axe arrière parallèle audit axe médian,
   o une face supérieure,
   o une face inférieure,
   lesdites faces se reliant les unes aux autres par des zones de jonction,
- une coiffe de revêtement dudit bloc, ladite coiffe étant formée par une pluralité de formats de matériau de revêtement associés entre eux bord à bord de manière à définir une poche de logement dudit bloc,

ladite coiffe comprenant :
   - un format avant d'un seul tenant recouvrant :
      ∘ ladite face avant,
      o ladite face supérieure,
      o et une partie desdites sous-faces inférieures,
   - un format arrière d'un seul tenant recouvrant :
      o ladite face arrière,
      o lesdites sous-faces supérieures,
      o et une partie desdites sous-faces inférieures,
la liaison entre lesdits formats avant et arrière sur chacune desdites sous-faces inférieures se faisant selon une ligne de jonction traversant chacune desdites sous-faces inférieures en s'étendant sensiblement dudit axe avant au coin bas correspondant de ladite face arrière.

Quand il est dit qu'un format est d'un seul tenant, cela signifie qu'il n'est pas formé de différents formats élémentaires associés entre eux.

L'agencement proposé par la demanderesse résulte de nombreux essais ayant abouti à une telle réduction du nombre de formats par rapport à ce qui était connu de l'art antérieur.

Dans cette description, les termes de positionnement dans l'espace (supérieur, inférieur, transversal, latéral, avant, arrière, dessous,...) sont pris en référence à l'appui-tête disposé en position d'utilisation dans le véhicule.

Avec l'agencement proposé, on peut réaliser une coiffe comprenant uniquement deux formats de matériau de revêtement associés l'un à l'autre, ou éventuellement trois comme décrit plus loin.

Une telle réduction du nombre de formats pour réaliser la coiffe par rapport à ce qui était connu de l'art antérieur permet de simplifier notoirement la réalisation de l'appui-tête, et par voie de conséquence d'en baisser le coût de fabrication.

D'autres particularités et avantages de l'invention apparaîtront dans la description qui suit, faite en référence aux figures jointes, dans lesquelles :
- la figure 1 est une vue schématique en perspective partielle d'un appui-tête selon une réalisation, ledit appui-tête étant dépourvu de coiffe,
- la figure 2 est une vue schématique en perspective de l'appui-tête de la figure 1 avec une coiffe selon une réalisation,
- la figure 3 est une vue schématique en perspective de l'appui-tête de la figure 1 avec une coiffe selon une variante par rapport à la réalisation de la figure 2,
- la figure 4 est analogue à la figure 2 en vue en perspective par le dessous,
- la figure 5 est analogue à la figure 2, l'appui-tête étant représenté pour visualiser un appui-tête avec des zones de jonction incurvées entre les faces.

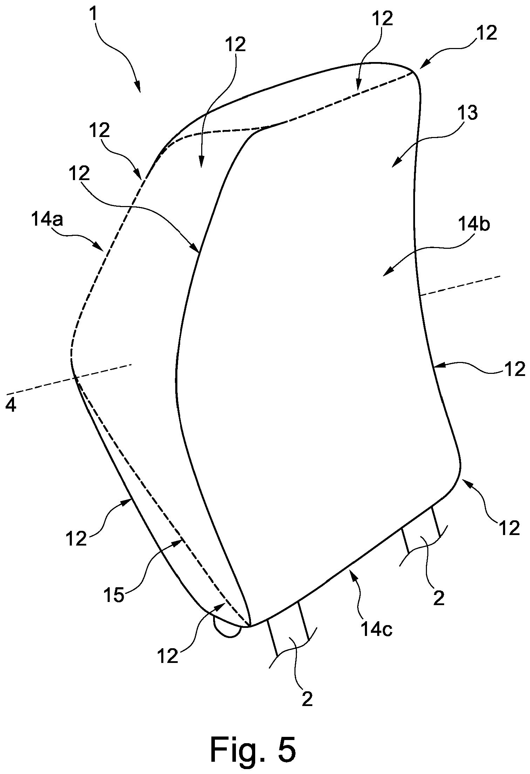

En référence aux figures, on décrit un appui-tête 1 de siège de véhicule automobile, ledit appui-tête comprenant :
- une armature 2 de montage - par exemple sous forme de tube métallique replié de manière à présenter une forme générale de U renversé - sur un dossier dudit siège,
- un bloc 3 de rembourrage - par exemple en mousse élastiquement compressible, notamment de polyuréthanne, ou encore en matériau fibreux tel qu'un feutre - associé en haut de ladite armature, ledit bloc s'inscrivant sensiblement dans une enveloppe, notamment en forme générale de parallélépipède, pliée selon un axe transversal médian 4 de manière à présenter :
   o deux faces latérales 5 en forme générale de V aplati renversé d'un quart de tour dont la pointe est tournée vers l'avant, lesdites faces définissant une sous-face supérieure 5a correspondant à la branche supérieure du V et une sous-face inférieure 5b correspondant à la branche inférieure du V,
   o une face avant 6 s'inscrivant sensiblement dans un plan avant supérieur et un plan avant inférieur se coupant selon un axe avant 7 parallèle audit axe médian,
   ∘ une face arrière 8 s'inscrivant sensiblement dans un plan arrière supérieur et un plan arrière inférieur se coupant selon un axe arrière 9 parallèle audit axe médian,
   o une face supérieure 10,
   o une face inférieure 11,
   lesdites faces se reliant les unes aux autres par des zones de jonction 12, ledit zones étant notamment incurvées (voir figure 5),
- une coiffe 13 de revêtement dudit bloc, ladite coiffe étant formée par une pluralité de formats de matériau de revêtement associés entre eux bord à bord de manière à définir une poche de logement dudit bloc,
ladite coiffe comprenant :
- un format avant 14a d'un seul tenant recouvrant :
   o ladite face avant,
   o ladite face supérieure,
   o et une partie desdites sous-faces inférieures,
- un format arrière 14b d'un seul tenant recouvrant :
   o ladite face arrière,
   o lesdites sous-faces supérieures,
   o et une partie desdites sous-faces inférieures,
la liaison entre lesdits formats avant et arrière sur chacune desdites sous-faces inférieures se faisant selon une ligne de jonction 15 traversant chacune desdites sous-faces inférieures en s'étendant sensiblement dudit axe avant au coin bas 16 correspondant de ladite face arrière.

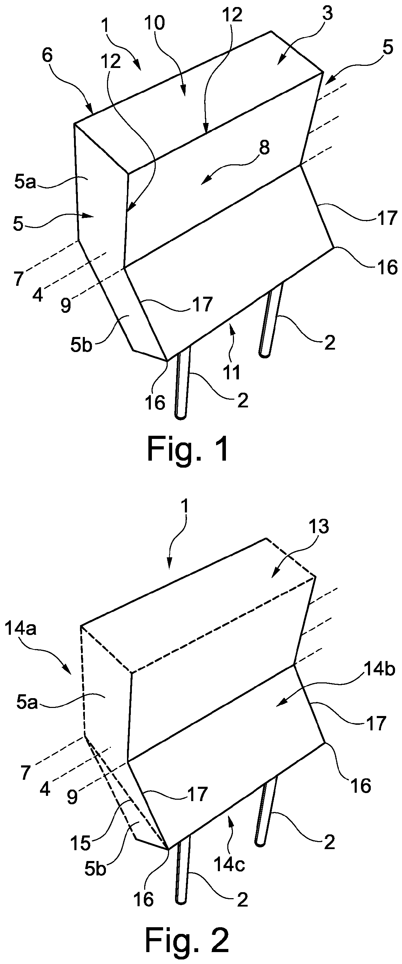

Selon la réalisation représentée en figure 2, les lignes de jonction 15 ne s'étendent pas en périphérie des sous-faces inférieures 5b, lesdites lignes étant confinées à l'intérieur desdites sous faces, étant notamment sensiblement rectilignes.

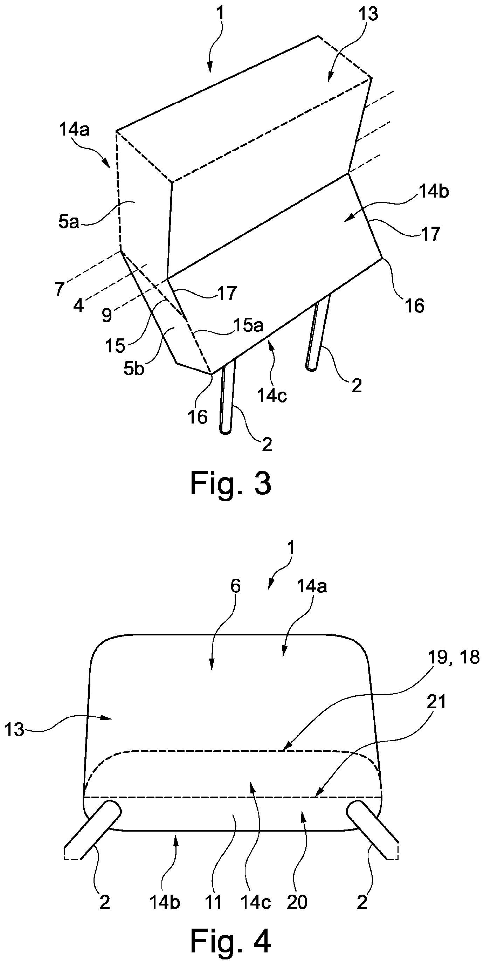

Selon la variante représentée en figure 3, les lignes de jonction 15 présentent une partie inférieure 15a s'étendant en partie selon le bord arrière 17 des sous-faces inférieures 5b.

Selon la réalisation représentée en figure 4 :
- le bord inférieur 18 du format avant 14a s'étend le long du bord inférieur 19 de la face avant 6,
- le format arrière 14b présente une bordure inférieure 20 recouvrant partiellement la face inférieure 11,
- un format inférieur 14c de matériau de revêtement d'un seul tenant est associé entre ledit bord inférieur du format avant et le bord externe 21 de ladite bordure, de manière à permettre un masquage intégral de ladite face inférieure.

En variante non représentée, on pourrait prévoir de remplacer le format inférieur 14c par un cache en matière plastique, par exemple moulée.

Selon une réalisation, le bloc 3 de rembourrage est à base de mousse élastiquement compressible - notamment de polyuréthanne - surmoulant l'envers de la coiffe 13.

Selon une autre réalisation, la coiffe 13 est chaussée sur le bloc 3 de rembourrage.

Selon une réalisation, l'association entre les formats 14a,14b,14c est réalisée par couture.

En variante, on pourrait prévoir une association par soudure.

Selon une réalisation non représentée, les formats 14a,14b,14c de matériau de revêtement comprennent une couche externe d'aspect - par exemple en textile ou en cuir - et une sous-couche à base de mousse flexible.

En figure 5 est représenté un appui-tête 1 selon une réalisation qui permet de visualiser des zones de jonction incurvées 12 et qui montre que le volume du bloc 3 peut ne pas s'inscrire rigoureusement dans une enveloppe en forme générale de parallélépipède plié, ceci dans la mesure où l'épaisseur dudit bloc s'amenuise quand on se dirige depuis l'axe 4 vers le haut ou vers le bas.

## Revendications

1. Appui-tête (1) de siège de véhicule automobile, ledit appui-tête comprenant :
• une armature (2) de montage sur un dossier dudit siège,
• un bloc (3) de rembourrage associé en haut de ladite armature, ledit bloc s'inscrivant sensiblement dans une enveloppe pliée selon un axe transversal médian (4) de manière à présenter :
o deux faces latérales (5) en forme générale de V aplati renversé d'un quart de tour dont la pointe est tournée vers l'avant, lesdites faces définissant une sous-face supérieure (5a) correspondant à la branche supérieure du V et une sous-face inférieure (5b) correspondant à la branche inférieure du V,
o une face avant (6) s'inscrivant sensiblement dans un plan avant supérieur et un plan avant inférieur se coupant selon un axe avant (7) parallèle audit axe médian,
o une face arrière (8) s'inscrivant sensiblement dans un plan arrière supérieur et un plan arrière inférieur se coupant selon un axe arrière (9) parallèle audit axe médian,
o une face supérieure (10),
o une face inférieure (11),
lesdites faces se reliant les unes aux autres par des zones de jonction (12),
• une coiffe (13) de revêtement dudit bloc, ladite coiffe étant formée par une pluralité de formats de matériau de revêtement associés entre eux bord à bord de manière à définir une poche de logement dudit bloc,
ledit appui-tête étant **caractérisé en ce que** ladite coiffe comprend :
• un format avant (14a) d'un seul tenant recouvrant :
o ladite face avant,
o ladite face supérieure,
o et une partie desdites sous-faces inférieures,
• un format arrière (14b) d'un seul tenant recouvrant :
o ladite face arrière,
o lesdites sous-faces supérieures,
o et une partie desdites sous-faces inférieures,
la liaison entre lesdits formats avant et arrière sur chacune desdites sous-faces inférieures se faisant selon une ligne de jonction (15) traversant chacune desdites sous-faces inférieures en s'étendant sensiblement dudit axe avant au coin bas (16) correspondant de ladite face arrière.

2. Appui-tête selon la revendication 1, **caractérisé en ce que** l'enveloppe est en forme générale de parallélépipède.

3. Appui-tête selon l'une des revendications 1 ou 2, **caractérisé en ce que** les lignes de jonction (15) ne s'étendent pas en périphérie des sous-faces inférieures (5b).

4. Appui-tête selon l'une des revendications 1 ou 2, **caractérisé en ce que** les lignes de jonction (15) présentent une partie inférieure (15a) s'étendant en partie selon le bord arrière (17) des sous-faces inférieures.

5. Appui-tête selon l'une quelconque des revendications 1 à 4, **caractérisé en ce que** :
• le bord inférieur (18) du format avant (14a) s'étend le long du bord inférieur (19) de la face avant (6),
• le format arrière (14b) présente une bordure inférieure (20) recouvrant partiellement la face inférieure (11),
• un format inférieur (14c) de matériau de revêtement d'un seul tenant est associé entre ledit bord inférieur du format avant et le bord externe (21) de ladite bordure, de manière à permettre un masquage intégral de ladite face inférieure.

6. Appui-tête selon l'une quelconque des revendications 1 à 5, **caractérisé en ce que** le bloc (3) de rembourrage est à base de mousse élastiquement compressible surmoulant l'envers de la coiffe (13).

7. Appui-tête selon l'une quelconque des revendications 1 à 5, **caractérisé en ce que** la coiffe (13) est chaussée sur le bloc (3) de rembourrage.

8. Appui-tête selon l'une quelconque des revendications 1 à 7, **caractérisé en ce que** l'association entre les formats (14a,14b,14c) est réalisée par couture.

9. Appui-tête selon l'une quelconque des revendications 1 à 8, **caractérisé en ce que** les formats (14a,14b,14c) de matériau de revêtement comprennent une couche externe d'aspect est une sous-couche à base de mousse flexible.

10. Appui-tête selon l'une quelconque des revendications 1 à 9, **caractérisé en ce que** des zones de jonction (12) sont incurvées.

## Patentansprüche

1. Kopfstütze (1) für einen Kraftfahrzeugsitz, wobei die Kopfstütze umfasst:
• eine Armatur (2) zur Montage an der Rückenlehne des Sitzes,
• einen oben an der Armatur angebundenen Polsterungsblock (3), wobei der Block im Wesentlichen in einer entlang einer mittleren Querachse (4) derart gefalteten Hülle eingeschrieben ist, um Folgendes aufzuweisen:
∘ zwei seitliche Flächen (5) in einer allgemeinen Form eines um eine Vierteldrehung gestürzten abgeflachten V, dessen Spitze nach vorne gedreht ist, wobei die Flächen eine obere Unterseite (5a), die dem oberen Schenkel des V entspricht, und eine untere Unterseite (5b) definieren, die dem unteren Schenkel des V entspricht,
∘ eine vordere Fläche (6) die im Wesentlichen in eine obere vordere Ebene und eine untere vordere Ebene eingeschrieben ist, die sich entlang einer vorderen Achse (7) parallel zur mittleren Achse schneiden,
∘ eine hintere Fläche (8), die im Wesentlichen in eine obere hintere Ebene und eine untere hintere Ebene eingeschrieben ist, die sich entlang einer hinteren Achse (9) parallel zur mittleren Achse schneiden,
∘ eine obere Fläche (10),
∘ eine untere Fläche (11),
wobei die Flächen durch Verbindungsbereiche (12) miteinander verknüpft sind,
• eine Bezugsabdeckung (13) des Blocks, wobei die Abdeckung durch eine Vielzahl von Bezugsmaterialformaten gebildet werden, die derart auf Stoß aneinandergebunden sind, um eine Aufnahmetasche für den Block zu definieren, wobei die Kopfstütze **dadurch gekennzeichnet ist, dass** die Abdeckung umfasst:
• ein vorderes Format (14a) aus einem einzigen Stück, das Folgendes abdeckt:
∘ die vordere Fläche,
∘ die obere Fläche,
∘ und einen Teil der unteren Unterseiten,
• ein hinteres Format (14b) aus einem einzigen Stück, das Folgendes abdeckt:
∘ die hintere Fläche,
∘ die oberen Unterseiten,
∘ und einen Teil der unteren Unterseiten,
wobei die Verknüpfung zwischen dem vorderen und hinteren Format auf jeder der unteren Unterseiten entsprechend einer Verbindungslinie (15) erfolgt, die jede der unteren Unterseiten quert, und sich dabei im Wesentlichen aus der vorderen Achse in der entsprechenden unteren Ecke (16) der hinteren Fläche erstreckt.

2. Kopfstütze nach Anspruch 1, **dadurch gekennzeichnet, dass** die Hülle in einer allgemeinen Form eines Quaders ist.

3. Kopfstütze nach einem der Ansprüche 1 oder 2, **dadurch gekennzeichnet, dass** sich die Verbindungslinien (15) nicht an der Peripherie der unteren Unterseiten (5b) erstrecken.

4. Kopfstütze nach einem der Ansprüche 1 oder 2, **dadurch gekennzeichnet, dass** die Verbindungslinien (15) einen unteren Teil (15a) aufweisen, der sich teilweise entlang des hinteren Randes (17) der unteren Unterseiten erstreckt.

5. Kopfstütze nach einem der Ansprüche 1 bis 4, **dadurch gekennzeichnet, dass**:
• sich der untere Rand (18) des vorderen Formats (14a) entlang des unteren Randes (19) der vorderen Fläche (6) erstreckt,
• das hintere Format (14b) eine untere Umrandung (20) aufweist, die die untere Fläche (11) teilweise abdeckt,
• ein unteres Format (14c) aus Bezugsmaterial aus einem Stück zwischen dem unteren Rand des vorderen Formats und dem äußeren Rand (21) der Umrandung angebunden ist, um eine vollständige Verdeckung der unteren Fläche zu ermöglichen.

6. Kopfstütze nach einem der Ansprüche 1 bis 5, **dadurch gekennzeichnet, dass** der Polsterungsblock (3) auf Grundlage eines elastisch verdichtbaren Schaumstoffes ist, der die Kehrseite der Abdeckung (13) überzieht.

7. Kopfstütze nach einem der Ansprüche 1 bis 5, **dadurch gekennzeichnet, dass** die Abdeckung (13) auf den Polsterungsblock (3) aufgezogen ist.

8. Kopfstütze nach einem der Ansprüche 1 bis 7, **dadurch gekennzeichnet, dass** der Verbund zwischen den Formaten (14a, 14b, 14c) durch Nähen erfolgt.

9. Kopfstütze nach einem der Ansprüche 1 bis 8, **dadurch gekennzeichnet, dass** die Formate (14a, 14b, 14c) aus Bezugsmaterial eine äußere Erscheinungsschicht und eine Unterseite auf Grundlage von flexiblem Schaumstoff umfassen.

10. Kopfstütze nach einem der Ansprüche 1 bis 9, **dadurch gekennzeichnet, dass** die Verbindungsbereiche (12) gekrümmt sind.

## Claims

1. Headrest (1) of a vehicle seat, said headrest comprising:
• a framework (2) for mounting on a backrest of said seat,
• a padding block (3) associated with the top of said framework, said block substantially fitting within a wrapping folded according to a median transverse axis (4) so as to have:
o two lateral faces (5) having the general shape of a flattened V reversed by a quarter turn, whose tip is directed forwards, said faces defining an upper underside (5a) corresponding to the upper branch of the V and a lower underside (5b) corresponding to the lower branch of the V,
o a front face (6) substantially fitting within an upper front plane and a lower front plane intersecting according to a front axis (7) parallel to said median axis,
o a rear face (8) substantially fitting within an upper rear plane and a lower rear plane intersecting according to a rear axis (9) parallel to said median axis,
o an upper face (10),
o a lower face (11),
said faces being connected to each other by junction areas (12),
• a cover (13) for covering said block, said cover being formed by a plurality of formats made of a covering material associated together edge-to-edge so as to define a pocket for housing said block,
said headrest being **characterised in that** said cover comprises:
• a front format (14a) made in one-piece overlaying:
o said front face,
o said upper face,
o and a portion of said lower undersides,
• a rear format (14b) made in one-piece overlaying:
o said rear face,
o said upper undersides,
o and a portion of said lower undersides,
the connection between said front and rear formats on each of said lower sub-faces being done according to a junction line (15) crossing each of said lower undersides extending substantially from said front axis to the corresponding lower corner (16) of said rear face.

2. Headrest according to claim 1, **characterised in that** the wrapping has a parallelepipedic general shape.

3. Headrest according to one of claims 1 or 2, **characterised in that** the junction lines (15) do not extend at the periphery of the lower sub-faces (5b).

4. Headrest according to one of claims 1 or 2, **characterised in that** the junction lines (15) have a lower portion (15a) extending partially along the rear edge (17) of the lower undersides.

5. Headrest according to any one of claims 1 to 4, **characterised in that**:
• the lower edge (18) of the front format (14a) extends along the lower edge (19) of the front face (6),
• the rear format (14b) has a lower border (20) partially covering the lower face (11),
• a lower format (14c) made of a covering material in one-piece is associated between said lower edge of the front format and the outer edge (21) of said border, so as enable a complete masking of said lower face.

6. Headrest according to any one of claims 1 to 5, **characterised in that** the padding block (3) is based on an elastically-compressible foam overmoulding the back of the cover (13).

7. Headrest according to any one of claims 1 to 5, **characterised in that** the cover (13) is fitted on the padding block (3).

8. Headrest according to any one of claims 1 to 7, **characterised in that** the association between the formats (14a, 14b, 14c) is made by sewing.

9. Headrest according to any one of claims 1 to 8, **characterised in that** the formats (14a, 14b, 14c) made of a coating material comprise a trimming outer layer is an under-layer based on a flexible foam.

10. Headrest according to any one of claims 1 to 9, **characterised in that** the junction areas (12) are curved.
